# EUROPÄISCHE PATENTSCHRIFT

(11) **EP 2 742 557 B1**
(45) Veröffentlichungstag und Bekanntmachung des Hinweises auf die Patenterteilung: **12.10.2016**
(21) Anmeldenummer: 12750572.5
(22) Anmeldetag: 09.08.2012
(51) Int. Cl.: H01M 10/613, H01M 10/6556, H01M 10/6557, H01M 10/615, H01M 10/625

(54) **VORRICHTUNG ZUR TEMPERIERUNG EINES ENERGIESPEICHERS INSBESONDERE FÜR EIN FAHRZEUG UND VERFAHREN ZUM HERSTELLEN DERSELBEN**
DEVICE FOR CONTROLLING THE TEMPERATURE OF AN ENERGY ACCUMULATOR, MORE PARTICULARLY FOR A VEHICLE, AND METHOD FOR PRODUCTION THEREOF
DISPOSITIF POUR THERMORÉGULER UN ACCUMULATEUR D'ÉNERGIE EN PARTICULIER POUR UN VÉHICULE ET PROCÉDÉ DE FABRICATION DE CELUI-CI

(30) Priorität: 11.08.2011 DE 102011080813; 04.10.2011 DE 102011084003
(43) Veröffentlichungstag der Anmeldung: 18.06.2014
(73) Patentinhaber: MAHLE Behr GmbH & Co. KG, 70469 Stuttgart (DE)
(72) Erfinder: DAUBITZER, Nikolaus, 70376 Stuttgart (DE); LUDWIG, Lars, 73776 Altbach (DE); NEFF, Heiko, 71549 Auenwald (DE)
(74) Vertreter: Grauel, Andreas
(86) Internationale Anmeldenummer: PCT/EP2012/065630
(87) Internationale Veröffentlichungsnummer: WO 2013/021037

(56) Entgegenhaltungen:
- US-A- 5 437 941
- US-A- 5 443 926
- US-A1- 2005 100 771
- US-A1- 2007 082 251
- US-A1- 2008 003 492

## Beschreibung

Die vorliegende Erfindung bezieht sich auf eine Vorrichtung zur Temperierung eines Energiespeichers insbesondere für ein Fahrzeug und auf ein Verfahren zum Herstellen einer Vorrichtung zur Temperierung eines Energiespeichers, insbesondere für ein Fahrzeug.

Bei einem Batteriekühler für ein Fahrzeug ist es von Interesse, kundenspezifische Kühlerlösungen mit entsprechend spezifischen Fluidführungen zu schaffen. Dies kann beispielsweise durch den Einsatz eines Baukastensystems erfolgen, was jedoch eine lediglich innerhalb gewisser Grenzen variable Lösung darstellt.

Es ist die Aufgabe der vorliegenden Erfindung, eine verbesserte Vorrichtung zur Temperierung eines Energiespeichers insbesondere für ein Fahrzeug und ein verbessertes Verfahren zum Herstellen einer Vorrichtung zur Temperierung eines Energiespeichers insbesondere für ein Fahrzeug zu schaffen.

Diese Aufgabe wird durch eine Vorrichtung zur Temperierung eines Energiespeichers insbesondere für ein Fahrzeug und durch ein Verfahren zum Herstellen einer Vorrichtung zur Temperierung eines Energiespeichers insbesondere für ein Fahrzeug gemäß den unabhängigen Patentansprüchen gelöst.

Eine Vorrichtung zur Temperierung, beispielsweise ein Batteriekühler kann in geklebter Bauweise realisiert werden. Dadurch kann eine Temperiervorrichtung bzw. ein Kühler in geklebter Bauweise zur Temperierung bzw. Kühlung von Energiespeichern in Fahrzeuganwendungen geschaffen werden. Hierbei kann mittels Klebstoff sowohl eine Verbindung von Außenwandelementen der Vorrichtung als auch eine Bildung zumindest eines Fluidführungskanals zur Führung von Temperierfluid realisiert sein.

Vorteilhafterweise kann durch die geklebte Bauweise eine kostengünstige Herstellung von Einzelteilen der Vorrichtung und der Vorrichtung selbst, verbunden mit geringen spezifischen Investitionskosten, ermöglicht werden. Ferner ergeben sich eine geringe Anzahl von Einzelteilen sowie ein geringes Gewicht der Vorrichtung und eine Reduzierung kostenintensiver kundenspezifischer Werkzeuge sowie Bauteile. Ein weiterer Vorteil ist, dass insbesondere auch Kosten von Umformwerkzeugen, Fluidführungskomponenten, welche die Fluidführung bewirken, und eines Fügeprozesses gesenkt werden können. Die Fluidführung bzw. der zumindest eine Fluidführungskanal ist unabhängig von ur- bzw. umformbedingten Herstellgrenzen variabel fertigbar, so dass sich der Vorteil einer geometrisch weit gehend frei wählbaren Fluidführungsstruktur ergibt. Ebenfalls vorteilhaft sind eine Kostenreduzierung durch Einsatz günstiger Verfahrenstechniken zur Herstellung der Vorrichtung, eine Gewichtseinsparung durch geringen Materialeinsatz, eine Reduzierung passiver thermischer Masse sowie ein Erhalt der Strukturfestigkeit der verwendeten Außenwandelemente bzw. Halbzeuge.

Die vorliegende Erfindung schafft eine Vorrichtung zur Temperierung eines Energiespeichers insbesondere für ein Fahrzeug, wobei die Vorrichtung ein erstes Außenwandelement und ein zweites Außenwandelement aufweist, dadurch gekennzeichnet, dass eine Hauptoberfläche des ersten Außenwandelements und eine Hauptoberfläche des zweiten Außenwandelements mittels zumindest einer Rippe aus einem ausgehärteten Klebstoff miteinander verbunden sind, wobei die Rippe zumindest einen Fluidführungskanal zur Führung eines Temperierfluids zwischen dem ersten Außenwandelement und dem zweiten Außenwandelement bildet.

Unter einem Fahrzeug kann hierbei ein Fahrzeug, insbesondere ein straßengebundenes Kraftfahrzeug, wie beispielsweise ein Personenkraftwagen, Lastkraftwagen, Omnibus oder ein anderes Nutzfahrzeug, verstanden werden. Das Fahrzeug kann insbesondere einen elektrischen oder teilelektrischen Antrieb aufweisen. Der Energiespeicher kann dabei ausgebildet sein, um elektrische Energie für den Antrieb des Fahrzeugs zu speichern. Der Energiespeicher kann einen bevorzugten Betriebstemperaturbereich aufweisen. Mittels der Vorrichtung zur Temperierung kann eine Temperatur des Energiespeichers in dem Betriebstemperaturbereich oder innerhalb eines definierbaren Toleranzbereichs um den Temperaturbereich herum gehalten werden. Dazu kann die Vorrichtung zur Temperierung ausgebildet sein, um eine Kühlung des Energiespeichers zu ermöglichen. Zusätzlich oder alternativ kann die Vorrichtung zur Temperierung ausgebildet sein, um eine Erwärmung des Energiespeichers zu ermöglichen. Somit kann es sich bei der Vorrichtung allgemein gesagt auch um einen Wärmeübertrager handeln. Eine Wärmeübertragung bezüglich des Energiespeichers kann hierbei über die Außenwandelemente sowie das Temperierfluid erfolgen. Die Außenwandelemente können aus metallischem Blech oder Kunststoff sowie Folien, Aluminium-Blechen oder dergleichen gefertigt sein. Bei den Außenwandelementen kann es sich um Gehäusehälften oder dergleichen handeln, die gemeinsam eine Außenwand der Vorrichtung bilden. Bei den Hauptoberflächen kann es sich um innere Hauptoberflächen der Außenwandelemente handeln. Die Hauptoberflächen stehen im Betrieb der Vorrichtung teilweise in Kontakt mit dem Temperierfluid, das im Inneren der Vorrichtung geführt werden kann. Der Energiespeicher des Fahrzeugs kann mit einer von der Hauptoberfläche abgewandten Außenoberfläche von einem oder beiden Außenwandelementen in thermischen Kontakt gebracht werden. Bei dem Temperierfluid kann es sich um ein Kühlmittel oder Kältemittel oder ein anderes Wärmeübertragungsmittel handeln. Die Außenwandelemente sind mittels der zumindest einen Rippe beispielsweise so verbunden, dass die Hauptoberflächen der Außenwandelemente voneinander beanstandet sind. Der Klebstoff kann auf organischer Basis oder anorganischer Basis beruhen. Auch kann der Klebstoff chemisch oder physikalisch ausgehärtet sein. Beispielsweise kann unter dem Klebstoff auch ein Fügemittel, eine Klebemasse oder Dichtmasse verstanden werden.

Die zumindest eine Rippe ist als eine umlaufende Kleberaupe ausgeformt, welche die Außenwandelemente in Randbereichen der Hauptoberflächen verbindet. Die Kleberaupe kann somit einen in sich geschlossenen Verlauf aufweisen. Die Kleberaupe kann dabei die Außenwandelemente entlang peripherer Bereiche der Hauptoberflächen verbinden. Die Randbereiche bzw. peripheren Bereiche können sich entlang eines Umfangs der Hauptoberflächen erstrecken. Eine solche Ausführungsform bietet den Vorteil, dass eine Abdichtung des zumindest einen Fluidführungskanals bezüglich einer Umgebung der Vorrichtung erzielt werden kann. Zudem kann eine Druckfestigkeit der Vorrichtung verbessert werden.

Auch ist die zumindest eine Rippe als zumindest eine Kleberaupe ausgeformt, welche die Außenwandelemente in von Randbereichen beabstandeten Binnenbereichen der Hauptoberflächen verbindet. Die zumindest eine Kleberaupe in den Binnenbereichen ist zusätzlich zu der zumindest einen Kleberaupe in den Randbereichen vorhanden. Eine solche Ausführungsform bietet den Vorteil, dass eine Druckfestigkeit der Vorrichtung verbessert werden kann. Zudem kann mittels der zumindest einen Kleberaupe in den Innenbereichen eine kundenspezifische bzw. variable Gestaltung der Fluidführung bzw. eine Flowfieldgestaltung erzielt werden.

Ferner können das erste Außenwandelement und/oder das zweite Außenwandelement zumindest einen Abstandshalter zum Definieren eines Abstandes der Hauptoberflächen der Außenwandelemente zueinander aufweisen. Ein solcher Abstandshalter kann einstückig mit einem Außenwandelement gebildet sein. Der zumindest eine Abstandshalter kann als ein Vorsprung bezüglich der Hauptoberfläche des Außenwandelements ausgeformt sein, an welcher der Abstandshalter gebildet ist. Der zumindest eine Abstandshalter kann in Kontakt mit der Hauptoberfläche des anderen Außenwandelements stehen. Ein solcher Abstandshalter bietet den Vorteil, dass beispielsweise eine definierte Verpressung der zumindest einen Rippe bzw. Fügeschicht ermöglicht wird, so dass eine Beabstandung der Hauptoberflächen der Außenwandelemente eine minimale Beabstandung nicht unterschreitet. Der zumindest eine Abstandshalter kann hierbei beispielsweise als Noppe oder Rippe ausgebildet sein. Alternativ kann der zumindest eine Abstandshalter auch als ein separates Einlegeteil ausgebildet sein. Auch kann der zumindest eine Abstandshalter bereits in den Klebstoff eingearbeitet sein (z.B. Glasperlen).

Zudem kann das erste Außenwandelement oder das zweite Außenwandelement eine erste Fluidöffnung für das Temperierfluid aufweisen und kann das erste Außenwandelement oder das zweite Außenwandelement eine zweite Fluidöffnung für das Temperierfluid aufweisen. Dabei kann eine der Fluidöffnungen einer Fluidzufuhr dienen und kann eine andere der Fluidöffnungen einer Fluidabfuhr dienen. Somit kann das Temperierfluid beispielsweise von der ersten Fluidöffnung durch den zumindest einen Fluidführungskanal zu der zweiten Fluidöffnung strömen. Eine Positionierung der Fluidöffnungen ist dabei je nach Anforderung beispielsweise bezüglich des ersten Außenwandelements und des zweiten Außenwandelements aufteilbar sowie bezüglich eines einzelnen Außenwandelements geeignet und frei wählbar. Somit kann mindestens eines der Außenwandelemente eine geometrische Gestaltung für eine Fluidversorgung aufweisen. Eine solche Ausführungsform bietet den Vorteil, dass eine Versorgung mit dem Temperierfluid auf flexibel und kundenspezifisch anpassbare Weise möglich ist.

Dabei können ein erstes Fluidanschlusselement, das an der ersten Fluidöffnung angebracht ist, und ein zweites Fluidanschlusselement, das an der zweiten Fluidöffnung angebracht ist, vorgesehen sein. Die Anbringung der Fluidanschlusselemente bzw. Anschlussstutzen, wie z.B. Schlauchstutzen, Einschraubstutzen, Schnellkupplungsanschlüsse oder dergleichen, kann dabei z.B. sowohl über Klebe- oder Dichtmassen als auch über thermische oder mechanische Fügeverfahren erfolgen. Eine solche Ausführungsform bietet den Vorteil, dass eine Versorgung mit dem Temperierfluid bereits vorrichtungsseitig vorbereitet werden kann, so dass ein Anschluss der Vorrichtung beispielsweise an einen Fluidkreislauf eines Fahrzeugs erleichtert wird.

Auch können das erste Außenwandelement und/oder das zweite Außenwandelement zumindest einen Befestigungsbereich zur Befestigung der Außenwandelemente aneinander mittels mechanischen oder thermischen Fügens aufweisen. Der zumindest eine Befestigungsbereich kann dabei eine Befestigung direkt oder indirekt ermöglichen. Beispielsweise kann der zumindest eine Befestigungsbereich ausgebildet sein, um die Befestigung in Zusammenwirkung mit zumindest einem Befestigungsmittel zu bewirken. Der zumindest eine Befestigungsbereich kann ausgebildet sein, um eine Befestigung der Außenwandelemente aneinander mittels eines mechanischen oder thermischen Fügeverfahrens, wie beispielsweise Schrauben, Nieten, Punktschweißen oder dergleichen, zu ermöglichen. Der Befestigungsbereich kann dabei beabstandet zu einem durch die zumindest eine Rippe bedeckten Bereich der Außenwandelemente sein.

Demnach können das erste Außenwandelement und das zweite Außenwandelement innerhalb des zumindest einen Befestigungsbereichs mittels einer mechanischen oder thermischen Fügeverbindung miteinander verbunden sein. Eine solche zusätzliche Fügeverbindung bietet den Vorteil, dass die Strukturfestigkeit der Vorrichtung bei Bedarf zusätzlich noch erhöht werden kann.

Insbesondere sind das erste Außenwandelement und das zweite Außenwandelement plattenförmig ausgeformt. Auch weist die zumindest eine Rippe eine erste, umlaufende Kleberaupe, welche die Außenwandelemente in Randbereichen der Hauptoberflächen verbindet, und zumindest eine nicht geschlossene Kleberaupe auf, welche die Außenwandelemente in von Randbereichen beabstandeten Binnenbereichen der Hauptoberflächen verbindet. Somit kann es sich bei der Vorrichtung beispielsweise um eine Kühlplatte handeln. Eine solche Ausführungsform bietet den Vorteil, dass eine Wärmeübertragungsfläche sowie eine Wärmeübertragungsleistung aufgrund der plattenförmigen Ausgestaltung noch weiter optimiert werden können. Hierbei ist eine Verwendung von Aluminium-Blechen für zumindest eines der Außenwandelemente aufgrund der guten Wärmeleitung vorteilhaft.

Die vorliegende Erfindung schafft ferner ein Verfahren zum Herstellen einer Vorrichtung zur Temperierung eines Energiespeichers insbesondere für ein Fahrzeug, wobei das Verfahren folgende Schritte aufweist:
Bereitstellen eines ersten Außenwandelements und eines zweiten Außenwandelements;
Aufbringen zumindest einer Rippe aus einem Klebstoff auf eine Hauptoberfläche des ersten Außenwandelements, wobei die Rippe zumindest einen Fluidführungskanal zur Führung eines Temperierfluids entlang der Hauptoberfläche des ersten Außenwandelements bildet;
Anlegen einer Hauptoberfläche des zweiten Außenwandelements auf die Hauptoberfläche des ersten Außerswandelements; und
Aushärten des Klebstoffs der zumindest einen Rippe, um das erste Außenwandelement und das zweite Außenwandelement miteinander zu verbinden und die Vorrichtung zur Temperierung herzustellen.

Durch Ausführung des Verfahrens kann eine oben genannte Vorrichtung vorteilhaft hergestellt werden. Das Aufbringen des Klebstoffes bzw. der Auftrag der Klebe- oder Dichtmasse kann beispielsweise sowohl über ein Siebdruckverfahren oder einen CNC-gesteuerten Dosierauftrag erfolgen und ist somit geometrisch nahezu frei wählbar. Durch die Variabilität der Aufbringung des Klebstoffes für den Fluidführungskanal zur Führung des Temperierfluids sind verschiedene Durchströmungsarten, wie z.B. I-, U-, S-, W-förmige Durchströmung oder eine Durchströmung mit einer oder mehreren Umlenkungen, möglich. Das Aushärten des Klebstoffes bzw. der Klebe- oder Dichtmassenfügung kann an den Typ des eingesetzten oder gewählten Klebstoffes bzw. Fügemittels angepasst werden. Auch wenn der Aushärtevorgang des Klebstoffes beispielsweise durch Wärmeeintrag beschleunigt werden kann, wird eine Strukturfestigkeit der verwendeten Außenwandelemente im Gegensatz zu einem Fügen durch Löten oder Schweißen nicht negativ beeinflusst.

Gemäß einer Ausführungsform des Verfahrens kann im Schritt des Aufbringens zumindest eine weitere Rippe aus Klebstoff auf die Hauptoberfläche des zweiten Außenwandelements aufgebracht werden. Eine solche Ausführungsform bietet den Vorteil, dass somit eine Herstellung der Kühlfluidführung durch variablen Auftrag einer geeigneten Kleb- oder Dichtmasse zwischen den beiden Außenwandelementen ermöglicht ist. Die Rippe wird auf mindestens einem Außenwandelement appliziert und anschließend mit mindestens einem weiteren Außenwandelement gefügt. Die zumindest eine weitere Rippe auf dem zweiten Außenwandelement kann versetzt oder überlappend mit der zumindest einen Rippe auf dem ersten Außenwandelement ausgeführt sein. Für die Rippen auf den beiden Außenwandelementen kann jeweils derselbe oder ein unterschiedlicher Klebstoff verwendet werden.

Alternativ ist es auch möglich, dass ein Zellboden oder ein Wandbereich eines Energiespeichers ein Außenwandelement der oben beschriebenen Vorrichtung in Baueinheit bildet. Dabei ist es vorteilhaft, wenn die Vorrichtung in einer offenen Ausgestaltung gebildet ist, so dass ein Außenwandelement, wie ein Deckblech, eine Kleberaupe und ein Wandbereich der einer Zelle oder eines Energiespeichers als verwendete Bauteile zusammengesetzt bzw. verbunden sind.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Vorrichtung gemäß einem Ausführungsbeispiel der vorliegenden Erfindung;
- Fig. 2: einen Ausschnitt der Vorrichtung aus Fig. 1; und
- Fig. 3: Teile der Vorrichtung aus Fig. 1.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

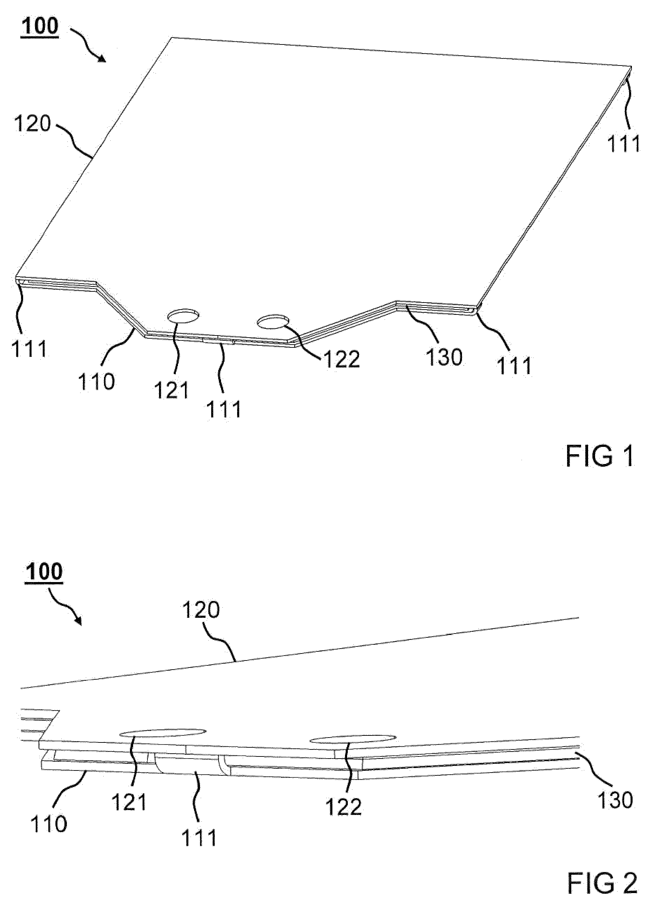

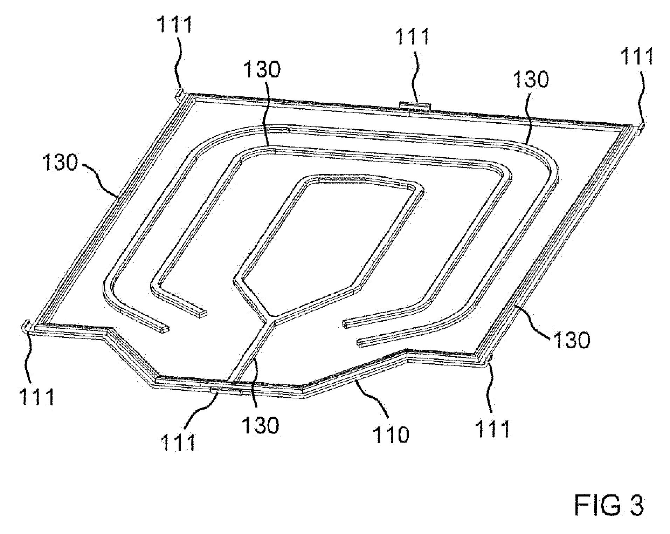

Fig. 1 zeigt eine Vorrichtung 100 zur Temperierung eines Energiespeichers insbesondere für ein Fahrzeug, gemäß einem Ausführungsbeispiel der vorliegenden Erfindung. Bei der Vorrichtung 100 kann es sich beispielsweise um eine Kühlplatte handeln. Die Vorrichtung 100 weist ein erstes Außenwandelement 110 bzw. unteres Deckblech, Abstandshalter 111, ein zweites Außenwandelement 120 bzw. oberes Deckblech, eine erste Fluidöffnung 121, eine zweite Fluidöffnung 122 und Klebstoffrippen 130 bzw. Kleberaupen bzw. eine Fügeschicht aus Klebemasse auf. In der Darstellung von Fig. 1 ist lediglich eine Klebstoffrippe 130 sichtbar, wobei weitere Klebstoffrippen 130 von dem zweiten Außenwandelement 120 verdeckt sind. Die Klebstoffrippen 130 der Vorrichtung 100 sind in Fig. 3 sichtbar und unter Bezugnahme auf Fig. 3 weitergehend beschrieben. Ferner sind in Fig. 1 beispielhaft vier Abstandshalter 111 gezeigt, wobei die Vorrichtung 100 zumindest einen weiteren Abstandshalter 111 aufweisen kann, der von dem zweiten Außenwandelement 120 verdeckt sein kann.

Das erste Außenwandelement 110 und das zweite Außenwandelement 120 weisen einen rechteckigen Grundriss mit einer trapezförmigen Ausbuchtung an einer Seite auf. Der Grundriss des ersten Außenwandelements 110 entspricht hierbei innerhalb von Fertigungstoleranzen dem Grundriss des zweiten Außenwandelements 120. Eine Grundfläche des ersten Außenwandelements 110 kann geringfügig kleiner sein als eine Grundfläche des zweiten Außenwandelements 120. Das erste Außenwandelement 110 und das zweite Außenwandelement 120 sind plattenförmig ausgebildet. Somit weist das zweite Außenwandelement 120 eine planare Außenoberfläche auf. Auch wenn es in Fig. 1 nicht sichtbar ist, so kann auch das erste Außenwandelement 110 eine planare Außenoberfläche aufweisen. Auch können Innenoberflächen bzw. innere Hauptoberflächen des ersten Außenwandelements 110 und des zweiten Außenwandelements 120 planare Oberflächen sein. Das zweite Außenwandelement 120 ist in der Darstellung von Fig. 1 auf dem ersten Außenwandelement 110 gestapelt angeordnet, wobei die inneren Hauptoberflächen der Außenwandelemente 110, 120 einander zugewandt sind und zwischen den Außenwandelementen 110, 120 die Klebstoffrippen 130 angeordnet sind.

Das erste Außenwandelement 110 weist die Abstandshalter 111 auf. Die Abstandshalter 111 sind einstückig mit dem ersten Außenwandelement 110 gebildet. Die Abstandshalter 111 sind im Bereich einer Umfangskante des ersten Außenwandelements 110 gebildet. Insbesondere sind die Abstandshalter 111 als gebogene Vorsprünge des ersten Außenwandelements 110 ausgeformt. Hierbei erstrecken sich die Vorsprünge bezüglich der inneren Hauptoberfläche des ersten Außenwandelements 110 in Richtung zu der inneren Hauptoberfläche des zweiten Außenwandelements 120. Die Abstandshalter 111 befinden sich in Kontakt mit Abschnitten der inneren Hauptoberfläche des zweiten Außenwandelements 120. Auf eine Positionierung der Abstandshalter 111 wird unter Bezugnahme auf Fig. 3 noch detaillierter eingegangen.

Das zweite Außenwandelement 120 weist die erste Fluidöffnung 121 und die zweite Fluidöffnung 122 auf. Beispielsweise ist die erste Fluidöffnung 121 kreisförmig gebildet und die zweite Fluidöffnung 122 kreisförmig gebildet. Die erste Fluidöffnung 121 und die zweite Fluidöffnung 122 sind im Bereich der trapezfarbigen Ausbuchtung des Grundrisses des zweiten Außenwandelements 120 angeordnet. Die erste Fluidöffnung 121 und die zweite Fluidöffnung 122 sind bezüglich einander beabstandet. Die erste Fluidöffnung 121 und die zweite Fluidöffnung 122 sind bezüglich einer Umfangskante des zweiten Außenwandelements 120 beabstandet. Dabei sind die erste Fluidöffnung 121 und die zweite Fluidöffnung 122 beispielhaft bezüglich einander weiter beabstandet als bezüglich einer Umfangskante des zweiten Außenwandelements 120. In der Praxis sind gemäß anderen Ausführungsbeispielen der vorliegenden Erfindung jedoch beliebige Formen und Positionierungen der Fluidöffnungen möglich. Beispielsweise kann die erste Fluidöffnung 121 einer Zufuhr von Temperierfluid in die Vorrichtung 100 dienen und kann die zweite Fluidöffnung 122 einer Abfuhr von Temperierfluid aus der Vorrichtung 100 dienen oder umgekehrt.

Die in Fig. 1 sichtbare, äußere Klebstoffrippe 130 der Vorrichtung 100 ist entlang peripherer Kanten bzw. Umfangskanten der inneren Hauptoberflächen der Außenwandelemente 110, 120 angeordnet. Die äußere Klebstoffrippe 130 kann ausgebildet sein, um zumindest einen zwischen den Außenwandelementen 110, 120 und mittels der Klebstoffrippen 130 im Inneren der Vorrichtung 100 gebildeten Fluidführungskanal gegenüber einer Umgebung der Vorrichtung 100 abzudichten. Ein genauer Verlauf der äußeren Klebstoffrippe 130 sowie eine Positionierung bzw. Anordnung weiterer Klebstoffrippen 130 der Vorrichtung 100 werden unter Bezugnahme auf Fig. 3 eingehender erläutert.

Fig. 2 zeigt einen vergrößerten Ausschnitt der Vorrichtung 100 aus Fig. 1 gemäß einem Ausführungsbeispiel der Erfindung. Gezeigt sind ein Teil des ersten Außenwandelements 110, einer der Abstandshalter 111, ein Teil des zweiten Außenwandelements 120, die erste Fluidöffnung 121, die zweite Fluidöffnung 122 und ein Teil der Klebstoffrippe 130, genau gesagt der äußeren Klebstoffrippe 130. Insbesondere zeigt Fig. 2 einen vergrößerten Ausschnitt der Vorrichtung 100 im Bereich der trapezförmigen Ausbuchtung in dem ansonsten rechteckigen Grundriss der Außenwandelemente 110, 120.

Fig. 3 zeigt Teile der Vorrichtung aus Fig. 1, wobei das zweite Außenwandelement in Fig. 3 weggenommen bzw. nicht dargestellt ist gemäß einem Ausführungsbeispiel der Erfindung. Dabei sind das erste Außenwandelement 110, beispielhaft sechs Abstandshalter 111 und beispielhaft vier Klebstoffrippen 130, gezeigt. Von dem ersten Außenwandelement 110 ist dabei insbesondere die innere Hauptoberfläche dargestellt. Die Klebstoffrippen 130 sind an der inneren Hauptoberfläche des ersten Außenwandelements 110 angeordnet.

Die bereits oben erwähnte äußere Klebstoffrippe 130 ist umlaufend entlang Umfangskanten der inneren Hauptoberfläche des ersten Außenwandelements 110 aufgebracht. Die äußere Klebstoffrippe 130 weist somit einen in sich geschlossenen Verlauf auf. Die äußere Klebstoffrippe 130 weist beispielhaft einen geringen Abstand zu den Umfangskanten der inneren Hauptoberfläche des ersten Außenwandelements 110 auf. Alternativ kann die äußere Klebstoffrippe 130 auch mit den Umfangskanten des ersten Außenwandelements 110 abschließen.

Eine erste innere Klebstoffrippe 130 ist weiter von den Umfangskanten beabstandet als die äußere Klebstoffrippe 130. Die erste innere Klebstoffrippe 130 verläuft somit innerhalb der geschlossenen äußeren Klebstoffrippe 130. Die erste innere Klebstoffrippe 130 weist einen hufeisenartigen, offenen Verlauf mit zwei Enden auf. Die zwei Enden der ersten inneren Klebstoffrippe 130 sind im Bereich der trapezförmigen Ausbuchtung oder angrenzend daran angeordnet.

Eine zweite innere Klebstoffrippe 130 ist innerhalb der ersten inneren Klebstoffrippe 130 angeordnet. Ein Verlauf der zweiten inneren Klebstoffrippe 130 entspricht hierbei dem Verlauf der ersten inneren Klebstoffrippe 130. Somit ist die zweite innere Klebstoffrippe 130 weiter von den Umfangskanten beabstandet als die erste innere Klebstoffrippe 130.

Eine dritte innere Klebstoffrippe 130 erstreckt sich von der äußeren Klebstoffrippe 130 im Bereich der trapezförmigen Ausbuchtung von der Umfangskante weg bis zu einem Verzweigungspunkt. An dem Verzweigungspunkt verzweigt sich die dritte innere Klebstoffrippe 130 in zwei Äste und bildet einen Abschnitt mit geschlossenem Verlauf innerhalb der zweiten inneren Klebstoffrippe 130. Somit ist der Abschnitt mit geschlossenem Verlauf der dritten inneren Klebstoffrippe 130 weiter von den Umfangskanten beabstandet als die zweite innere Klebstoffrippe 130.

Die Abstandshalter 111 sind einstückig mit dem ersten Außenwandelement 110 gebildete, gebogene Vorsprünge an einer umlaufenden Umfangskante des ersten Außenwandelements 110. An jeder der vier Ecken des rechteckigen Grundrisses des ersten Außenwandelements 110 ist ein Abstandshalter 111 angeordnet. Ein weiterer Abstandshalter 111 ist im Bereich der trapezförmigen Ausbuchtung gebildet und noch ein weiterer Abstandshalter 111 ist beispielhaft mit Blick an einer der trapezförmigen Ausbuchtung gegenüberliegenden Seite des Grundrisses gebildet.

Die beschriebenen Ausführungsbeispiele sind nur beispielhaft gewählt und können miteinander kombiniert werden.

## Patentansprüche

1. Vorrichtung (100) zur Temperierung eines Energiespeichers insbesondere für ein Fahrzeug, wobei die Vorrichtung (100) ein erstes Außenwandelement (110) und ein zweites Außenwandelement (120) aufweist, **dadurch gekennzeichnet, dass** eine Hauptoberfläche des ersten Außenwandelements (110) und eine Hauptoberfläche des zweiten Außenwandelements (120) mittels zumindest einer Rippe (130) aus einem ausgehärteten Klebstoff miteinander verbunden sind, wobei die Rippe (130) zumindest einen Fluidführungskanal zur Führung eines Temperierfluids zwischen dem ersten Außenwandelement (110) und dem zweiten Außenwandelement (120) bildet, wobei das erste Außenwandelement (110) und das zweite Außenwandelement (120) plattenförmig ausgeformt sind und die zumindest eine Rippe (130) eine erste, umlaufende Kleberaupe (130), welche die Außenwandelemente (110, 120) in Randbereichen der Hauptaberflächen verbindet, und zumindest eine nicht geschlossene Kleberaupe (130) aufweist, welche die Außenwandelemente (110, 120) in von Randbereichen beabstandeten Binnenbereichen der Hauptoberflächen verbindet.

2. Vorrichtung (100) gemäß einem der vorangegangenen Ansprüche, **dadurch gekennzeichnet, dass** das erste Außenwandelement (110) und/oder das zweite Außenwandelement (120) zumindest einen Abstandshalter (111) zum Definieren eines Abstandes der Hauptoberflächen der Außenwandelemente (110, 120) zueinander aufweisen.

3. Vorrichtung (100) gemäß einem der vorangegangenen Ansprüche, **dadurch gekennzeichnet, dass** das erste Außenwandelement (110) oder das zweite Außenwandelement (120) eine erste Fluidöffnung (121) für das Temperierfluid aufweist und das erste Außenwandelement (110) oder das zweite Außenwandelement (120) eine zweite Fluidöffnung (122) für das Temperierfluid aufweist.

4. Vorrichtung (100) gemäß Anspruch 3, **gekennzeichnet durch** ein erstes Fluidanschlusselement, das an der ersten Fluidöffnung (121) angebracht ist, und ein zweites Fluidanschlusselement, das an der zweiten Fluidöffnung (122) angebracht ist.

5. Vorrichtung (100) gemäß einem der vorangegangenen Ansprüche, **dadurch gekennzeichnet, dass** das erste Außenwandelement (110) und das zweite Außenwandelement (120) innerhalb zumindest eines Befestigungsbereich mittels einer mechanischen oder thermischen Fügeverbindung miteinander verbunden sind.

6. Verfahren zum Herstellen einer Vorrichtung (100) zur Temperierung eines Energiespeichers nach einem der Ansprüche 1 bis 5, insbesondere für ein
Fahrzeug, wobei das Verfahren folgende Schritte aufweist:
Bereitstellen eines ersten Außenwandelements (110) und eines zweiten Aufbringen zumindest einer Rippe (130) aus einem Klebstoff auf eine Hauptoberfläche des ersten Außenwandelements (110), wobei die Rippe (130) zumindest einen Fluidführungskanal zur Führung eines Temperierfluids entlang der Hauptoberfläche des ersten Außenwandelements (110) bildet;
Anlegen einer Hauptoberfläche des zweiten Außenwandelements (120) an die Hauptoberfläche des ersten Außenwandelements (110); und
Aushärten des Klebstoffs der zumindest einen Rippe (130), um das erste Außenwandelement (110) und das zweite Außenwandelement (120) miteinander zu verbinden und die Vorrichtung (100) zur Temperierung herzustellen.

7. Verfahren gemäß Anspruch 6, **dadurch gekennzeichnet, dass** im Schritt
des Aufbringens zumindest eine weitere Rippe (130) aus Klebstoff auf die Hauptoberfläche des zweiten Außenwandelements (120) aufgebracht wird.

## Claims

1. A device (100) for controlling the temperature of an energy store, in particular for a vehicle, wherein the device (100) has a first outer wall element (110) and a second outer wall element (120), **characterised in that** a main surface of the first outer wall element (110) and a main surface of the second outer wall element (120) are connected to each other by means of at least one rib (130) of hardened adhesive, wherein the rib (130) forms at least one fluid guiding channel for guiding a temperature control fluid between the first outer wall element (110) and the second outer wall element (120), wherein the first outer wall element (110) and the second outer wall element (120) are constructed in a plate-like manner and the at least one rib (130) has a first peripheral adhesive bead (130) which connects the outer wall elements (110, 120) in edge regions of the main surfaces, and at least one non-closed adhesive bead (130) which connects the outer wall elements (110, 120) in inner regions of the main surfaces spaced apart from edge regions.

2. The device (100) as claimed in one of the preceding claims, **characterised in that** the first outer wall element (110) and/or the second outer wall element (120) has/have at least one spacer (111) for defining a spacing of the main surfaces of the outer wall elements (110, 120) with respect to each other.

3. The device (100) as claimed in one of the preceding claims, **characterised in that** the first outer wall element (110) or the second outer wall element (120) has a first fluid opening (121) for the temperature control fluid and the first outer wall element (110) or the second outer wall element (120) has a second fluid opening (122) for the temperature control fluid.

4. The device (100) as claimed in claim 3, **characterised by** a first fluid connection element which is fitted to the first fluid opening (121), and a second fluid connection element which is fitted to the second fluid opening (122).

5. The device (100) as claimed in one of the preceding claims, **characterised in that** the first outer wall element (110) and the second outer wall element (120) are connected to each other within at least one securing region by means of a mechanical or thermal joining connection.

6. A method for producing a device (100) for controlling the temperature of an energy store as claimed in one of claims 1 to 5, in particular for a vehicle, wherein the method has the following steps:
providing a first outer wall element (110) and a second outer wall element (120);
applying at least one rib (130) of an adhesive to a main surface of the first outer wall element (110), wherein the rib (130) forms at least one fluid guiding channel for guiding a temperature control fluid along the main surface of the first outer wall element (110);
placing a main surface of the second outer wall element (120) on the main surface of the first outer wall element (110); and
hardening the adhesive of the at least one rib (130) in order to connect the first outer wall element (110) and the second outer wall element (120) to each other and to produce the device (100) for temperature control.

7. The method as claimed in claim 6, **characterised in that**, in the application step, at least one additional rib (130) of adhesive is applied to the main surface of the second outer wall element (120).

## Revendications

1. Dispositif (100) servant à l'équilibrage de la température d'un accumulateur d'énergie, en particulier pour un véhicule, où le dispositif (100) présente un premier élément de paroi extérieure (110) et un second élément de paroi extérieure (120), **caractérisé en ce qu'**une surface principale du premier élément de paroi extérieure (110) et une surface principale du second élément de paroi extérieure (120) sont assemblées l'une à l'autre au moyen au moins d'une nervure (130) se composant d'une colle durcie, où la nervure (130) forme au moins un canal de guidage de fluide servant au guidage d'un fluide d'équilibrage de température entre le premier élément de paroi extérieure (110) et le second élément de paroi extérieure (120), où le premier élément de paroi extérieure (110) et le second élément de paroi extérieure (120) sont configurés en forme de plaques, et la nervure (130) au moins au nombre de un présente un premier cordon de colle circulaire (130) qui assemble les éléments de paroi extérieure (110, 120) dans des zones de bordure des surfaces principales, et présente au moins un cordon de colle (130) non fermé qui assemble les éléments de paroi extérieure (110, 120) dans des zones intérieures des surfaces principales, espacées par rapport à des de zones de bordure.

2. Dispositif (100) selon l'une quelconque des revendications précédentes, **caractérisé en ce que** le premier élément de paroi extérieure (110) et / ou le second élément de paroi extérieure (120) présentent au moins une pièce d'écartement (111) servant à définir un espacement des surfaces principales des éléments de paroi extérieure (110, 120), l'une par rapport à l'autre.

3. Dispositif (100) selon l'une quelconque des revendications précédentes, **caractérisé en ce que** le premier élément de paroi extérieure (110) ou le second élément de paroi extérieure (120) présente une première ouverture de fluide (121) prévue pour le fluide d'équilibrage de température, et le premier élément de paroi extérieure (110) ou le second élément de paroi extérieure (120) présente une seconde ouverture de fluide (122) prévue pour le fluide d'équilibrage de température.

4. Dispositif (100) selon la revendication 3, **caractérisé par** un premier élément de raccordement de fluide qui est monté sur la première ouverture de fluide (121), et par un second élément de raccordement de fluide qui est monté sur la seconde ouverture de fluide (122).

5. Dispositif (100) selon l'une quelconque des revendications précédentes, **caractérisé en ce que** le premier élément de paroi extérieure (110) et le second élément de paroi extérieure (120) sont assemblés l'un à l'autre, à l'intérieur d'au moins une zone de fixation, au moyen d'un assemblage par jonction mécanique ou thermique.

6. Procédé de fabrication d'un dispositif (100) servant à l'équilibrage de la température d'un accumulateur d'énergie selon l'une quelconque des revendications 1 à 5, en particulier pour un véhicule, où le procédé présente les étapes suivantes consistant:
à fournir un premier élément de paroi extérieure (110) et un second élément de paroi extérieure (120) ;
à appliquer au moins une nervure (130) se composant de colle sur une surface principale du premier élément de paroi extérieure (110), où la nervure (130) forme au moins un canal de guidage de fluide servant au guidage d'un fluide d'équilibrage de température, le long de la surface principale du premier élément de paroi extérieure (110) ;
à placer une surface principale du second élément de paroi extérieure (120) contre la surface principale du premier élément de paroi extérieure (110) ; et
à laisser durcir la colle de la nervure (130) au moins au nombre de un, pour assembler l'un à l'autre le premier élément de paroi extérieure (110) et le second élément de paroi extérieure (120), et consistant à fabriquer le dispositif (100) servant à l'équilibrage de température.

7. Procédé selon la revendication 6, **caractérisé en ce que**, au cours de l'étape de l'application, au moins une autre nervure (130) se composant de colle est appliquée sur la surface principale du second élément de paroi extérieure (120).
